# FASCICULE DE BREVET EUROPEEN

(11) **EP 1 228 330 B1**
(45) Date de publication et mention de la délivrance du brevet: **26.01.2005**
(21) Numéro de dépôt: 00977638.6
(22) Date de dépôt: 09.11.2000
(51) Int. Cl.: F16L 1/19, F16L 1/23

(54) **SYSTEME DE PINCES POUR MAINTENIR UNE CONDUITE EN TENSION, ET SUPPORT FLOTTANT EN COMPRENANT**
GREIFERSYSTEM ZUM SPANNEN EINER ROHRLEITUNG, UND SEINE SCHWIMMFÄHIGE HALTEVORRICHTUNG
CLAMP SYSTEM FOR MAINTAINING A DUCT TENSIONED AND FLOATING SUPPORT COMPRISING SAME

(30) Priorité: 12.11.1999 FR 9914525
(43) Date de publication de la demande: 07.08.2002
(73) Titulaire: SAIPEM S.A., 78180 Montigny-le-Bretonneux (FR)
(72) Inventeur: BAYLOT, Michel, F-13008 Marseille (FR)
(74) Mandataire: Domange, Maxime
(86) Numéro de dépôt international: PCT/FR2000/003116
(87) Numéro de publication internationale: WO 2001/035011

(56) Documents cités:
- WO-A-98/50719
- GB-A- 1 278 112
- GB-A- 2 336 191
- US-A- 5 044 825
- US-A- 5 823 712

## Description

La présente invention concerne le maintien en tension d'une conduite. Plus particulièrement, la présente invention concerne un système de pinces encore appelé "clamp" installé sur un support flottant permettant de bloquer et maintenir en tension une conduite. La présente invention concerne également un support flottant comprenant un dispositif pour le raccordement et la pose des parties successives d'une conduite sous-marine depuis ledit support flottant.

La présente invention s'applique donc au maintien en suspension d'une conduite sensiblement verticale, mais aussi et à tout type de conduite destinée à véhiculer un fluide, un courant électrique, des signaux optiques ou des informations et notamment à des conduites tubulaires rigides ou flexibles, des ombilicaux et des câbles électriques. Elle s'applique en particulier à des conduites sous-marine manutentionnées depuis un navire effectuant des opérations d'installation, notamment par de très grandes profondeurs d'eau, c'est à dire vers 1000 m de profondeur et au delà.

Les opérations de forage. sont effectuées à partir d'un derrick équipé d'un treuil et d'un moufle pour manipuler le train de tiges. Au fur et à mesure du forage, le train de tige est rallongé par l'ajout d'une tige, en général de longueur unitaire multiple de 12 m, correspondant à la hauteur disponible sous le crochet du derrick. Ladite longueur est assemblée en général par vissage de la nouvelle longueur sur le train de tiges déjà assemblé et maintenu en suspension, au niveau de la table de rotation, par un système de pinces du type à coins marquants autobloquants.

De la même manière, la pose de conduites sous-marines pour les très grandes profondeurs est réalisée à partir de supports flottants équipés de moyens de manutention constitués d'une tour, articulée ou non, et possédant les fonctions de manutention similaires à celles d'un derrick. Pour les grandes profondeurs, la pose ainsi réalisée est dite en J, car la portion de conduite entre le niveau du navire et le point de contact sur le fond de la mer est en forme de J. Lors de la pose, le raccordement de parties successives de conduite nécessite de maintenir la partie de conduite déjà immergée, de présenter à l'extrémité de cette partie la nouvelle partie de conduite, de faire fonctionner des outils d'assemblage et de guider la conduite pour la pose en mer. L'utilisation de clamps à coins marquants en acier pour immobiliser la portion de conduite suspendue présente l'inconvénient de laisser des traces sur l'extérieur de la conduite, et surtout d'endommager le revêtement anti-corrosion. De nombreux autres types de clamps ont été développés, basés essentiellement sur des systèmes articulés à genouillère ou à verrouillage par came, les mouvements d'enclenchement et de dégagement du clamp étant souvent réalisés au moyen de vérins hydrauliques.

De tels clamps sont bien adaptés lorsque les charges sont faibles, mais dans les très grandes profondeurs, par exemple 2500 m, le poids des conduites peut dépasser 500 tonnes et il est nécessaire de garantir un niveau de sécurité extrêmement élevé quelque soit le type de conduite, pendant les phases de raboutage qui peuvent durer de 15 à 45 minutes par cycle, ou encore en cas d'interruption des opérations pour diverses raisons telles que des incidents d'équipement ou une tempête, laquelle peut durer plusieurs jours. Si l'on ne cherche pas à préserver l'intégrité du revêtement extérieur de la conduite, les clamps à coins marquants tels que décrits précédement remplissent parfaitement la fonction de retenir la conduite même si elle présente des irrégularité de diamètre, mais dès lors que ledit revêtement est fragile, ce type de clamp ne peut plus être employé.

De nombreuses solutions ont été développées pour éviter d'endommager l'extérieur des conduites, mais elles ne sont pas adaptées aux charges extrêmes car elles présentent l'inconvénient de ne pas assurer une sécurité positive en cas d'amorçage de phénomènes de glissement, ce qui risque de créer des accidents considérables, non seulement au niveau des matériels, mais aussi au niveau du personnel.

Le problème selon la présente invention est donc de pouvoir retenir avec un niveau de sécurité maximum, pour des niveaux de charge extrêmes, une conduite présentant une surface externe réputée fragile et d'assurer un fonctionnement sûr, même en cas de légères variations dimensionnelles dans la géométrie extérieure de la conduite ou de son revêtement externe.

Pour ce faire, la présente invention fournit un système de pinces ou "clamp", installé sur un support flottant, permettant .de maintenir en tension une conduite, comprenant :
- un élément tubulaire apte à contenir coaxialement ladite conduite et solidaire dudit support flottant, au niveau du plan d'assemblage
- ledit élément tubulaire comprenant une pluralité de patins de frottement,
- chacun desdits patins étant monté à l'extrémité d'un piston d'un vérin, de préférence hydraulique,
- lesdits vérins et patins étant disposés sur plusieurs plans dudit élément tubulaire le long de l'axe longitudinal dudit élément tubulaire, et sont répartis dans chacun desdits plans autour de ladite conduite, de préférence symétriquement par rapport audit axe longitudinal de l'élément tubulaire,
- lesdits pistons se déplaçant en translation selon une direction perpendiculaire audit axe longitudinal dudit élément tubulaire, de sorte que
   - lesdits patins de frottement sont en position de serrage contre ladite conduite lorsque lesdits pistons sont en position d'extension et lesdits patins sont en position de dégagement et libération de ladite conduite lorsqu'ils sont en position rétractée,
   - chaque vérin étant muni d'un moyen de blocage mécanique dudit piston en position d'extension. La pression hydraulique dans le cas de vérin hydraulique peut alors être relâchée tout en retenant ledit piston en position de serrage contre ladite conduite.

Le système de pinces selon l'invention assure une retenue de la conduite avec une haute sécurité car il permet de répartir les charges sur une zone étendue de la conduite au sein d'un même plan d'une part, mais aussi d'autre part, entre les différents plans.

Lors du serrage des patins contre la conduite, il est possible de moduler la pression appliquée sur les patins, de sorte que ceux-ci s'écrasent et répartissent l'effort de compression sur la conduite de manière sensiblement uniforme. En outre, il est possible de différencier la pression appliquée sur les différents plans, voire les différents patins d'un même plan, en fonction du type de conduite et du type de revêtement extérieur.

De préférence,. l'élément tubulaire comprend au moins 2, de préférence au moins 4 patins sur chacun desdits plans. Ledit élément tubulaire comprend au moins 3 plans, de préférence au moins 9 plans. Ledit élément tubulaire peut comprendre 30, voire 50 patins de frottement.

La pression de serrage desdits patins contre ladite conduite peut être adaptée plan par plan, et au sein d'un même plan, vérin par vérin.

La multiplication du nombre de plans permet donc d'atteindre l'effort de retenue souhaité, dans la mesure où l'élément souple que constituent les patins de frottement absorbent les déplacement de la conduite.

Dans le clamp selon l'invention, le vérin peut être un vérin mécanique à blocage de l'arbre moteur, ou un vérin hydraulique notamment à clapet sans fuites muni d'un accumulateur, à membrane ou à piston, notamment pour compenser les pertes aux joints, et dont le volume est calculé en fonction de la fuite anticipée pendant la durée maximale de fonctionnement du clamp.

De préférence, ledit moyen de blocage dudit piston est constitué par un moyen de vissage motorisé, ledit piston étant solidaire d'un écrou qui coopère avec une vis motorisée, de manière à déplacer en translation et bloquer ledit piston en position d'extension par blocage de la vis.

Chacun des vérins est donc muni d'un dispositif vis-écrou motorisé, permettant d'actionner la tige jusqu'à sa position de serrage contre la conduite. Le blocage de la vis peut être obtenu soit par blocage mécanique de l'élément tournant, soit par un dispositif réducteur de vitesse irréversible, ou encore par bloquage mécanique au niveau de l'arbre moteur, car le couple nécessaire au maintient y est réduit.

Les vérins mécaniques et hydrauliques étant connus de l'homme de l'art dans les domaines de la mécanique et de l'hydraulique ne seront pas développés plus en détails ici.

Dans un mode de réalisation préférentiel :
- ledit vérin comprend un corps de vérin creux solidaire dudit élément tubulaire constituant la structure du clamp,
- ledit piston comprend une tige comprenant un alésage fileté qui coopère avec une vis, de sorte que par dévissage, ladite vis sort dudit alésage et son extrémité vient buter contre le fond dudit corps creux, bloquant ainsi le mouvement dudit piston lorsque celui-ci est en dire position d'extension, et ladite vis comprend un alésage cannelé longitudinalement coopérant avec un arbre cannelé coaxial à ladite vis, de sorte que
- le vissage/dévissage de ladite vis se fait par rotation motorisée dudit arbre cannelé, et,
- lorsque la vis est vissée à l'intérieur de ladite tige, ledit piston peut se mouvoir librement en translation dans ladite direction perpendiculaire audit axe longitudinal de l'élément tubulaire sous l'effet d'une pression hydraulique, depuis sa position rétractée dans laquelle le piston vient buter contre le fond dudit corps creux jusqu'à sa position en extension dans laquelle l'extrémité de ladite vis vient buter contre le fond dudit corps creux, bloquant ainsi les mouvements dudit piston lorsque ledit piston est en position d'extension et de serrage contre ladite conduite.

De préférence, lesdits patins de frottement sont constitués par une couche d'élastomère montée sur un support de patin rigide.

Dans un mode de réalisation avantageux, une articulation flexible élastique est incorporée dans le support de patin ou entre ledit support de patin et le piston, ladite articulation transmettant les contraintes au niveau de la surface d'appui dudit patin de frottement avec ladite conduite en mouvement de translation de ladite conduite par rapport audit élément tubulaire, ledit mouvement de translation comprenant une composante de translation longitudinale selon l'axe de ladite conduite et une composante transversale selon une direction perpendiculaire audit axe de ladite conduite.

En particulier, l'articulation flexible élastique est constituée d'une butée lamifiée consistant en une pluralité de couches d'élastomère séparées entre elles par des renforts en matériau rigide.

De façon avantageuse, ladite butée lamifiée est disposée de façon inclinée, de préférence de 5 à 25°, de préférence encore 10 à 20° par rapport à l'axe longitudinal dudit élément tubulaire de façon à ce que, lorsque la conduite a tendance à glisser le long dudit axe longitudinal, notamment vers le bas, la force de serrage du patin contre la conduite est accrue en vertu d'un effet auto-coinceur. Cette butée lamifiée dans laquelle les couches élastomères sont inclinées constitue en effet un dispositif autocoinceur ou autoengageant empêchant le glissement de la conduite sous l'effet d'une charge dans la direction longitudinale de l'axe de ladite conduite, dans la mesure où ledit patin garde une surface de contact avec ladite conduite.

Dans un mode de réalisation particulier, ladite butée lamifiée a une forme de portion de surface de révolution tronconique, dont la plus petite base circulaire est située notamment à l'extrémité inférieure pour empêcher un glissement vers le bas de ladite conduite, la génératrice de ladite portion de surface de révolution étant inclinée, de préférence de 5 à 25°, de préférence encore 10 à 20°, par rapport à l'axe longitudinal dudit élément tubulaire.

Dans un mode de réalisation, lesdits supports de patin sont montés sur une rotule pmermettant le pivotement desdits supports et constituée de préférence d'une butée lamifiée de type sphérique.

Dans un mode de réalisation avantageux, ledit patin de frottement n'est pas disposé symétriquement par rapport au plan perpendiculaire à l'axe longitudinal comprenant l'axe dudit vérin, ledit patin étant excentré vers le bas par rapport audit axe dudit vérin. Ainsi la contrainte appliquée à la conduite par le vérin est plus importante dans la partie haute que dans la partie basse du patin. En cas de début de glissement, il se produit un accroissement de la force de compression, lequel crée un fluage de la paroi extérieure de la conduite. Ledit fluage est plus important la partie haute où la contrainte est plus forte, ce qui augmente l'amorcage de l'effet auto-coinceur ou auto-engageant du dispositif.

De façon avantageuse, lesdits patins de frottement sont constitués par plusieurs blocs de matériau élastomère entre lesquels sont interposées des mâchoires métalliques à effet marquant solidaires du support de patin, lesdites mâchoires étant en retrait par rapport à la surface d'appui desdits blocs. Ainsi, en fonctionnement normal, l'intégralité de la charge est transférée du patin vers la conduite par l'intermédiaire desdits blocs en matériau synthétique. Mais, dès que la force radiale devient excessive, le fluage de la paroi externe de la conduite met alors une partie de ladite paroi externe en contact avec lesdits éléments métalliques à effet marquant, ce qui constitue une sécurité ultime dans les conditions extrêmes, tout en minimisant les traces créées par les mâchoires métalliques sur le revêtement de la conduite.

Dans un mode de réalisation avantageux, une poutre est disposée entre le piston et le patin sensiblement parallèlement à l'axe longitudinal de l'élément tubulaire, ladite poutre étant reliée à un support de poutre par une articulation d'axe située à la base de la poutre, ledit élément support de poutre étant lui-même solidaire de l'élément tubulaire. Ce mode de réalisation permet de réduire considérablement les efforts de flexion dans l'axe du vérin, les efforts verticaux étant repris par ladite poutre.

La présente invention a également pour objet un dispositif pour le raccordement et la pose des parties successives d'une conduite sous-marine depuis ledit support flottant. Selon l'invention, ledit système de pinces comprend, pour bloquer et maintenir en suspension une première partie de conduite en position verticale ou inclinée, pour être assemblée à une deuxième partie de conduite avant immersion complète de ladite première partie de conduite sous-marine.

D'autres aspects, caractéristiques et avantages de la présente invention, ressortiront mieux à la lecture de la description qui va suivre, faite de manière illustrative et non limitative, en référence aux dessins annexés sur lesquels le support est une tour.

Sur les dessins :
- la figure 1 est un schéma en vue de côté de la pose en J d'une conduite par grande profondeur à partir d'un navire équipé d'une tour de pose de conduites sous marines.
- la figure 2 est une vue de côté d'un navire de pose en J détaillant les accessoires de pose en pas à pas d'une conduite sous-marine,
- la figure 3 est la vue de côté d'un clamp comportant une multiplicité de vérins organisés selon une multiplicité de plans,
- la figure 4 est une section en vue de dessus relative à la figure 3
- les figures 5, 6 et 7 sont des section d'un vérin hydraulique respectivement en position rétracté, en position de retenue et en position de retenue sécurisée,
- la figure 8 est une vue de côté en coupe de l'extrémité de la tige de vérin, détaillant un dispositif d'appui sur la paroi externe de la conduite, à effet auto-engageant,
- la figure 9 est une vue similaire à la figure 8 montrant les effets d'un désaxage de l'axe du vérin par rapport à la surface du patin en contact avec la conduite,
- la figure 10 est une section en vue de côté d'un dispositif permettant de transmettre la force de retenue directement au bâti du clamp,
- la figure 11 est une section en vue de côté d'un patin d'appui combiné à des mâchoires marquantes.

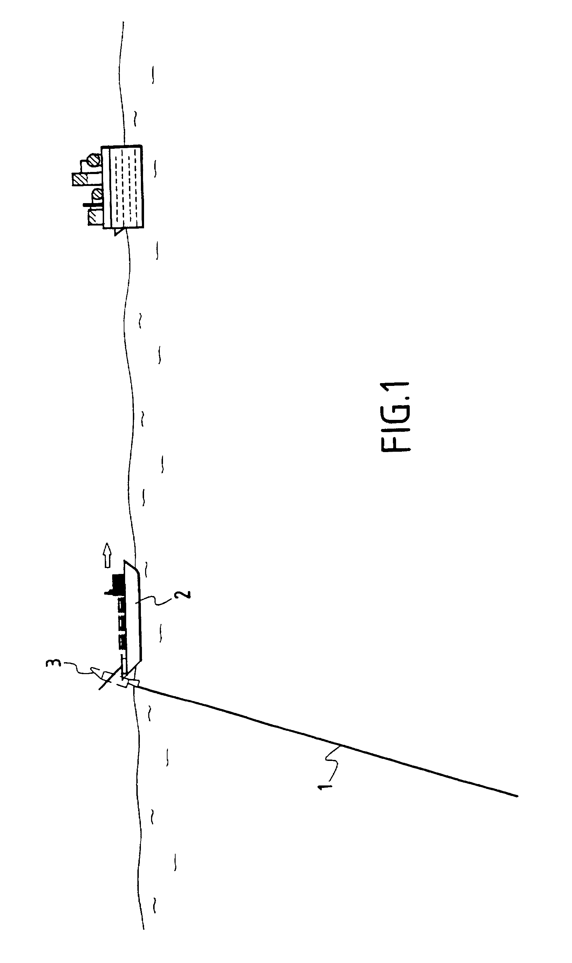

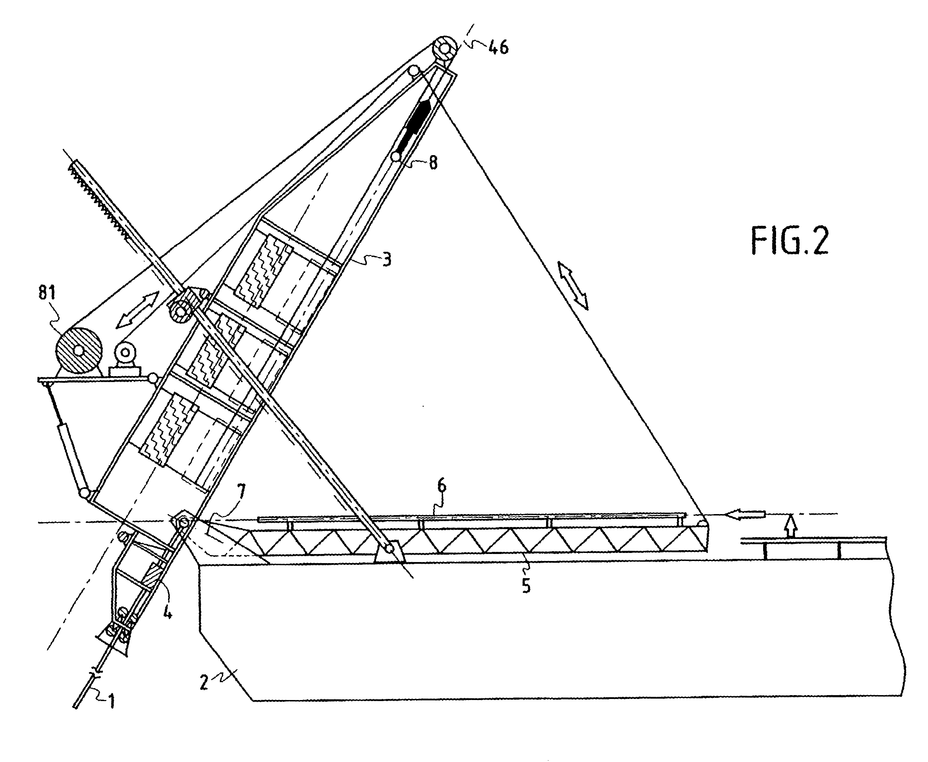

Les figures 1 et 2 représentent en vue de côté la pose en J d'une conduite 1 par grande profondeur à partir d'un navire 2 équipé d'une tour de pose de conduites sous marines 3.

L'invention s'applique ici à la pose d'une conduite constituée de tronçons rectilignes ou "rames" 6 assemblés et posés de proche en proche, chaque tronçon pouvant lui-même être constitué de plusieurs longueurs de conduite élémentaires assemblées pour constituer une rame. Les longueurs élémentaires sont en général de 12 mètres.

Cette rame 6 est formée à partir de longueurs unitaires élémentaires assemblées entre elles notamment par soudage.

A la base de la tour de pose, un clamp 4 selon l'invention, maintient en suspension la conduite 1 en attendant le relevage au moyen du bras de chargement 5 de la rame 6 constituée d'une longueur de conduite additionnelle. Après relevage de la poutre 5 portant la rame 6 juisqu'à ce que l'axe de la rame coïncide avec l'axe principal incliné 46 de la tour, l'extrémité supérieure de la rame 6 est saisie par un préhenseur 8 et l'ensemble est redescendu jusqu'à ce que l'extrémité inférieure de la rame vienne en contact avec la conduite en suspension, au niveau du plan d'assemblage 7. Les opérations d'assemblage, par exemple par soudage, sont effectuées au niveau du plan d'assemblage 7.

Le clamp 4 maintient l'ensemble pendant toute la durée d'assemblage, puis après reprise de la tension à l'extrémité supérieure de la conduite au moyen du treuil principal 81 relié au préhenseur 8, le clamp 4 peut être relâché pour libérer la conduite dont l'extrémité supérieure sera alors descendue à son tour jusqu'au plan d'assemblage 7. Le clamp sera alors de nouveau réactivé pour soutenir la conduite en vue d'effectuer le cycle suivant.

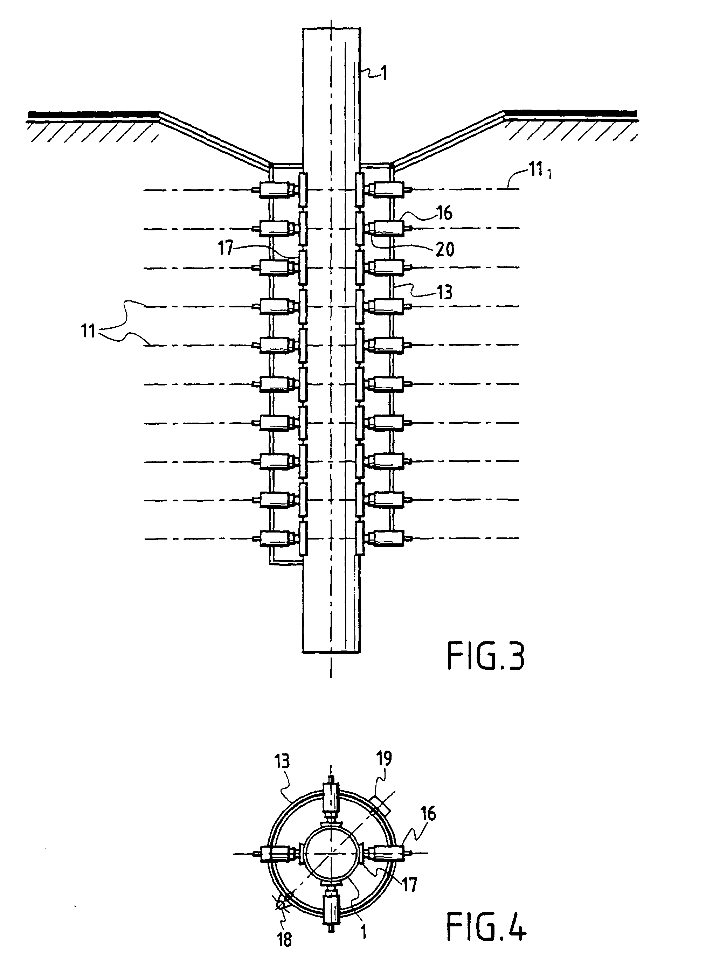

Sur les figures 3 et 4, un élément tubulaire 13 est apte à contenir coaxialement ladite conduite 1 et est solidaire dudit support flottant 2, au niveau du plan d'assemblage 7.

Ledit élément tubulaire 13 comprend une pluralité de patins de frottement 17. Chacun desdits patins est monté à l'extrémité d'un piston 20 d'un vérin de préférence hydraulique 16. Lesdits vérins 16 et patins 20 sont disposés sur plusieurs plans 11 dudit élément tubulaire 13 le long de l'axe longitudinal 46 dudit élément tubulaire, et sont répartis dans chacun desdits plans autour de ladite conduite, symétriquement par rapport audit axe longitudinal 46 de l'élément tubulaire 13.

La figure 3 est la vue de côté d'un clamp 4 comportant une structure tubulaire 13 comprenant dix plans 11 dans chacun desquels sont installés quatre vérins 6 régulièrement répartis autour de la structure sensiblement tubulaire 13, ladite structure solidarisant les vérins 16 entre eux et solidarisant de même les divers plans entre eux. La pression de serrage desdits patins contre ladite conduite est adaptée plan par plan.

Les pistons constituant les extrémités des tiges des vérins 16 sont équipées de patins 17 épousant la forme de la conduite 1 de manière à ne pas endommager la surface lorsque la force maximale du vérin est appliquée sur la conduite.

La figure 4 est une section en vue de dessus relative à la figure 3, effectuée au niveau du plan 11_{1,} montrant la structure du clamp 4, de préférence circulaire, ainsi que quatre vérins 16 munis de leurs patins 17 et répartis, de préférence, de manière uniforme autour de ladite structure. Le clamp est ouvrant grâce à une articulation 18 diamétralement opposée à un verrou 19, l'ouverture étant commandée soit manuellement soit à distance, par exemple par un vérin hydraulique non représenté.

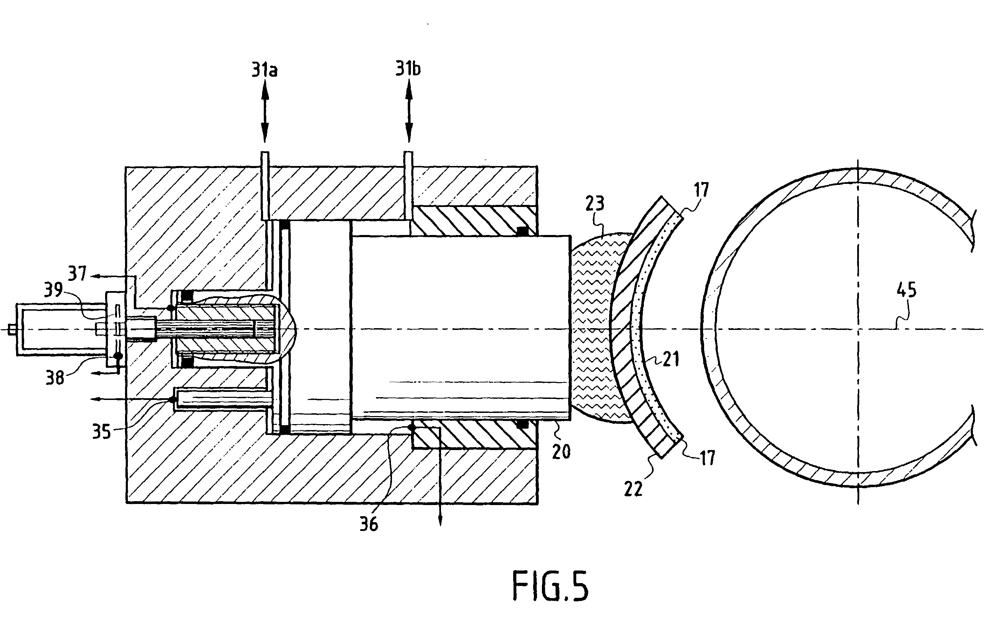

Sur les figures 5 à 7, la couche d'élastomère formant la surface d'appui 21 dudit patin 17 avec ladite conduite a, en section longitudinale, une forme de portion de cylindre selon un arc dont la courbure circulaire épouse la forme de ladite conduite à soutenir.

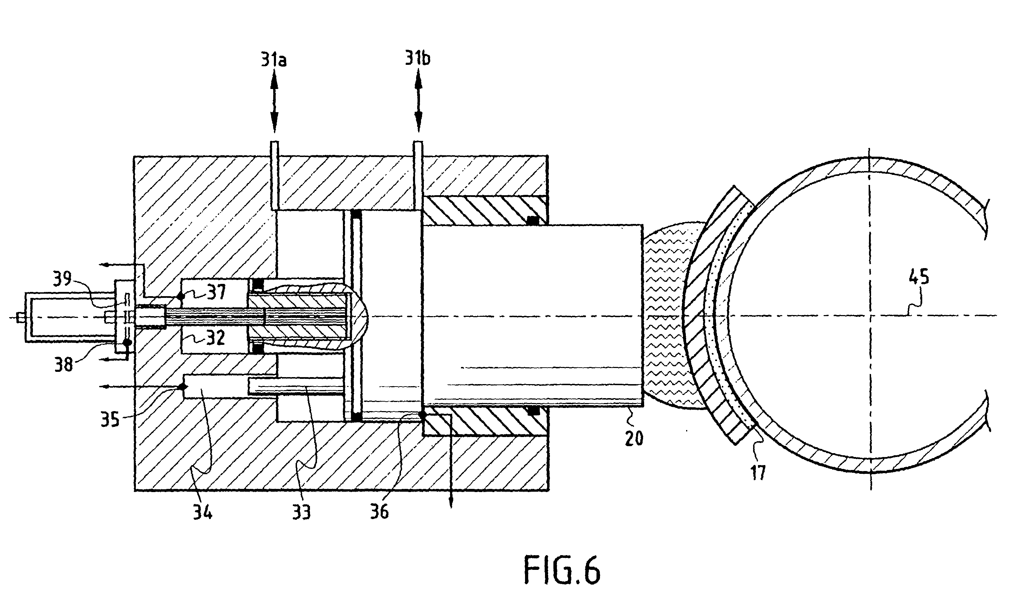

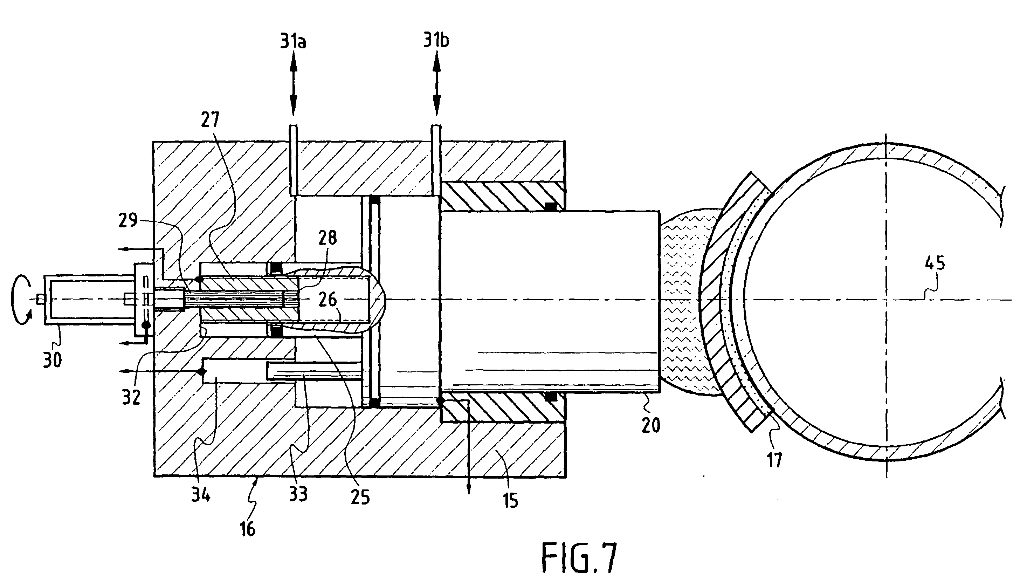

Les figures 5, 6 et 7 sont des sections d'un vérin hydraulique respectivement en position rétractée (figure 5), en position de retenue (figure 6) et en position de retenue sécurisée (figure 7). Lesdits pistons 20 se déplacent en translation selon une direction perpendiculaire 45 audit axe longitudinal 46 dudit élément tubulaire 13, de sorte que lesdits patins de frottement 17 sont en position de retenue, c'est-à-dire serrage contre ladite conduite 1 lorsque lesdits pistons 20 sont en position d'extension tel que représenté figures 6 et 7, et lesdits patins sont en position de dégagement et libération de ladite conduite lorsqu'ils sont en position rétractée, tel que représenté figure 5.

Chaque vérin est donc ainsi muni d'un moyen de blocage dudit piston en position d'extension, la pression hydraulique dans ledit vérin pouvant alors être relâchée tout en retenant ledit piston en position de serrage contre ladite conduite.

Ledit moyen de blocage dudit piston 20 est constitué par un moyen de vissage motorisé 30, ledit piston étant solidaire d'un écrou qui coopère avec une vis 27 motorisée, de manière à déplacer en translation et bloquer ledit piston en position d'extension par blocage de la vis.

Chaque vérin 16 comporte un corps de vérin creux 15, solidaire de la structure 13 du clamp 4. Un piston 20 à l'extrémité duquel est installé un patin d'appui 17 solidaire d'un support 22 lui-même solidaire du piston 20 par l'intermédiaire d'une articulation 23, telle qu'une rotule ou une butée lamifiée constituée d'un empilement de tôles métalliques séparées par des couches d'élastomère. Le patin 17 est avantageusement constitué d'une couche d'élastomère ou peut être une butée lamifiée du type cylindrique. De telles butées lamifiées sont fabriquées par la Société Techlam (France).

Tel que détaillé sur la figure 7, le piston 20 du vérin 16 est du type à double tige et possède sur la partie droite une tige 20 à l'extrémité de laquelle est installé le dispositif de patin presseur et sur la gauche une extrémité de tige 25 restant à l'intérieur du corps du vérin 15 et comportant un alésage fileté 26. L'alésage fileté 26 peut coopérer avec une vis 27 à l'axe de laquelle est percé un alésage 28 présentant des cannelures parallèles à l'axe de ladite vis. Cet alésage cannelé 28 reçoit l'arbre cannelé 29 d'un actionneur rotatif 30, tel un moteur électrique ou hydraulique. Ainsi, lorsque le piston 20 du vérin est sorti partiellement ou complètement, il est possible de faire tourner la vis 27 au moyen du moteur extérieur 30 et de la faire rentrer ou respectivement sortir selon le sens de rotation choisi. Le vérin 16 est actionné par injection d'huile respectivement par l'orifice 31ₐ pour le serrage de la conduite et par l'orifice 31_{b} pour la rétractation du vérin.

Plus précisément, l'alésage fileté 26 coopère avec la vis 27, de sorte que par dévissage, ladite vis sort dudit alésage 26 et son extrémité vient buter contre le fond 32 dudit corps creux, bloquant ainsi le mouvement dudit piston 20 lorsque celui-ci est en dite position d'extension. Ladite vis 27 comprend un alésage 28 cannelé longitudinalement coopérant avec un arbre cannelé 29 coaxial à ladite vis, de sorte que
- le vissage/dévissage de ladite vis se fait par rotation motorisée dudit arbre cannelé 29 et
- lorsque la vis est vissée à l'intérieur de ladite tige 25, ledit piston 20 peut se mouvoir librement en translation dans ladite direction perpendiculaire 45 audit axe longitudinal 46 de l'élément tubulaire 13 sous l'effet d'une pression hydraulique, depuis sa position rétractée dans laquelle l'extrémité de la tige 25 du piston 20 vient buter contre le fond 32 dudit corps creux jusqu'à sa position en extension dans laquelle l'extrémité de ladite vis vient buter contre le fond 32 dudit corps creux, bloquant ainsi les mouvements dudit piston lorsque ledit piston est en position d'extension et de serrage contre ladite conduite.

La figure 5 représente le vérin rétracté, la vis de sécurité 27 est rentrée à l'intérieur de la tige 25.

La figure 6 représente le vérin sorti, serrant la conduite 1, la vis de sécurité 27 étant encore rentrée à l'intérieur de la tige 25.

Dans la figure 7, le moteur 30 a actionné la rotation de la vis 27 jusqu'à ce que cette dernière vienne en butée avec le fond 32 du corps de vérin 16. La vis 27 se déplace en translation par rapport à l'axe de l'arbre 29 grâce à la présence des cannelures autorisant son coulissement ; dans cette position, la pression dans le vérin peut alors être relâchée et l'ensemble se trouve en sécurité.

La séquence de relâchement du clamp s'effectue de la manière suivante : a) mise en pression de tous les vérins ; b) déverrouillage de la vis 27 de sécurité et vissage à l'intérieur de la tige 25 ; c) relâchement de la pression et rétractaion des vérins, libération de la conduite.

En outre, dans la figure 7, une tige 33, solidaire du piston 20 coopère avec l'alésage 34 solidaire du corps du vérin empêchant la rotation du piston et maintenant ainsi l'axe du patin d'appui sensiblement parallèle à l'axe de la conduite 1. Des capteurs de position 35-36-37 permettent de remonter en surface les informations respectives : a) vérin rentré, b) vérin sorti, c) vis de sécurité en action.

Un capteur 38 coopère avec, par exemple un disque cranté 39 et permet de remonter en surface l'information relative à la position de la vis 27 à l'intérieur de l'alésage de la tige 25 du vérin. En procédant ainsi, on peut avantageusement créer un désaxage connu de la conduite par rapport à l'axe du clamp. Ceci n'est possible que si l'ensemble des tiges de vérins sont suffisament longues pour ne pas être en fin de course lorsque le serrage de la conduite est atteint. Pour cela, on positionne une, de préférence deux, séries de vérins dans la position excentrée recherchée, puis après verrouillage des dits vérins, le reste des vérins est actionné selon la procédure normale.

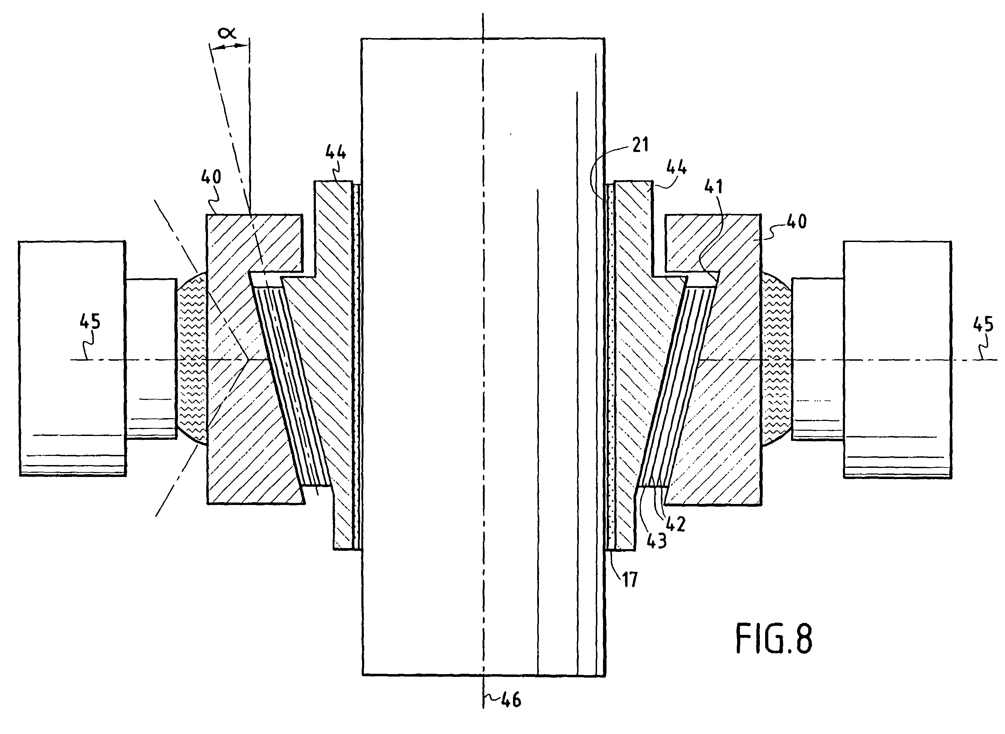

Sur les figures 8 à 11, lesdits patins de frottement 17 sont constitués par une couche d'élastomère montée sur un support de patin rigide 22. Une articulation flexible élastique 42/43, est incorporée entre ledit support de patin 40/44 et le piston 20. Cette articulation 42/43 transmet les contraintes au niveau de la surface d'appui 21 dudit patin de frottement 17 avec ladite conduite 1 en mouvement de translation de ladite conduite par rapport audit élément tubulaire, ledit mouvement de translation comprenant une composante de translation longitudinale selon l'axe 46 de ladite conduite et transversale selon une direction perpendiculaire 45 audit axe 46 de ladite conduite. Cette articulation flexible 42,43 élastique est constituée d'une butée lamifiée consistant en une pluralité de couches élastomère 43 séparées entre elles par des renforts en matériau rigide 42.

Ladite butée lamifiée a, en section longitudinale, une forme de portion de surface de révolution tronconique coaxiale à ladite conduite et dont la plus petite base circulaire est située à l'extrémité inférieure. Cette butée lamifiée dans laquelle les couches élastomères sont inclinées constitue un dispositif autocoinceur ou autoengageant empêchant le glissement de la conduite sous l'effet d'une charge dans la direction longitudinale de l'axe de ladite conduite, en gardant une surface de contact avec la conduite.

Sur la figure 8, on a représenté un dispositif autocoinceur, autoengageant selon l'invention, qui comprend un support 40 solidaire de l'extrémité de la tige de vérin et présentant une face 41 inclinée selon un angle α de 5 à 25°, et sur laquelle est fixée une butée lamifiée constituée de lames métalliques 42 séparées par des couches d'élastomère 43, ladite butée lamifiée étant solidaire du support 44 du patin 17 épousant la forme de la conduite à soutenir. Les ensembles support-butée lamifiée sont de préférence de révolution selon un arc de cercle d'angle d'ouverture inversement proportionel au nombre de vérins, de manière à ce qu'il n'y ait pas d'interférences entre deux ensembles adjacents.

Sur la figure 8, deux patins sont représentés en opposition et exercent sur la conduite un effort de poussée selon l'axe 45 et créent par friction au niveau des patins 17 une force de retenue, parallèle à l'axe 46 de la conduite 1, proportionelle audit effort de serrage. Les coefficients de friction usuellement constatés entre élastomères peuvent varier en général entre 0,05 et 0,15 , ce qui implique un effort de retenue de 5 à 15 tonnes pour un effort de serrage de 100 tonnes. Selon les principes de la mécanique, le coefficient de frottement est théoriquement indépendant de la surface du patin, mais la dite surface ne doit pas être trop faible, car la pression au niveau du patin serait alors trop forte et il en résulterait une déformation de la surface du revêtement de la conduite, qui par fluage de la matière conduirait à une réduction de la charge verticale acceptable, ce qui va à l'encontre du but recherché.

Lors du serrage de deux patins opposés, les butées lamifiées 42-43 ainsi que les patins d'appui 17 s'écrasent et répartissent de manière sensiblement uniforme l'effort de compression sur la conduite. Lorsque tous les vérins situés dans chacun des plans sont serrés, la conduite, retenue par le préhenseur, peut alors être relâchée et l'ensemble des patins entre alors en action et exerce, par friction une charge cumulée pouvant atteindre et dépasser 500 tonnes.

La conduite en suspension après relâchement du préhenseur présente dans sa paroi résistante un niveau de contrainte quasiment nul au dessus du clamp, alors qu'en partie basse, à la sortie du clamp, elle est maximale. Au niveau de chacun des plans, la contrainte augmente par l'accroissement de tension créé par les vérins dudit plan. Il s'ensuit un très léger allongement de la conduite sous l'effet dudit accroissement de tension. Ce léger allongement aura pour résultat de créer un léger glissement du patin dès lors que la valeur limite d'adhérence dudit patin aura été atteinte. Des butées lamifiées incorporées au système, au niveau du patin d'appui, du plan oblique ou encore à l'extrémité des tiges de vérins, ont pour effet, non seulement de répartir les efforts des vérins sur la conduite au sein d'un même plan, mais aussi, de répartir les charges entre les différents plans par absorption desdits légers allongements, ce qui retarde d'autant le début de déclenchement d'un glissement effectif.

Le dispositif selon la figure 8 présente, lorsque la conduite a tendance à glisser vers le bas, un effet auto-engageant ou autocoinceur qui augmente la force de serrage et retarde ainsi les phénomènes de glissement. Si l'angle α est faible, l'effet auto-engageant est maximum, un angle de 5 à 25° provocant avec les butées lamifiées l'effet engageant recherché.

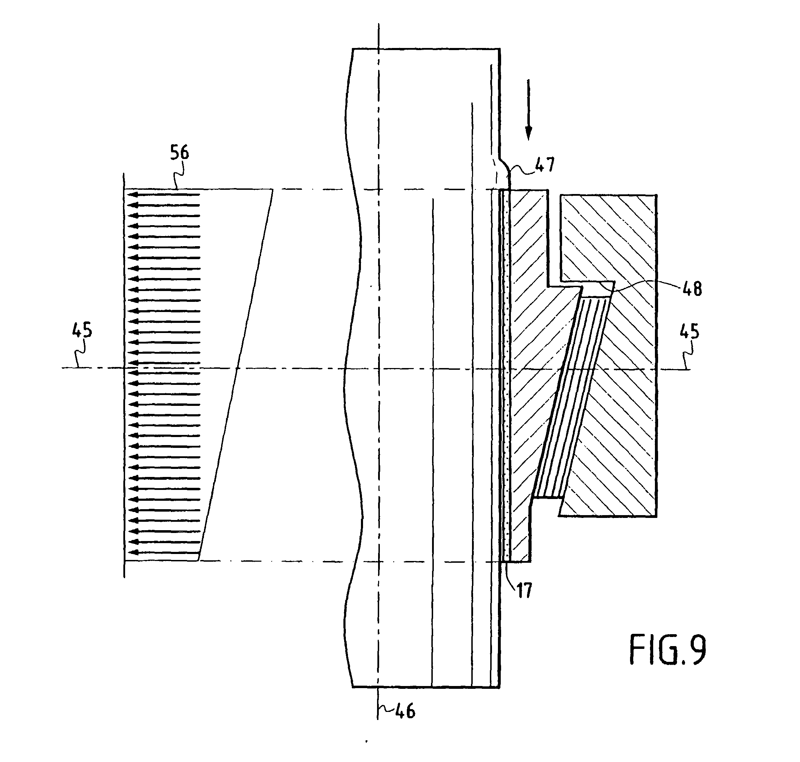

Dans la figure 9, un seul patin est représenté et il n'est pas disposé symétriquement par rapport au plan perpendiculaire à l'axe longitudinal 46 comprenant l'axe 45 dudit vérin, la surface d'appui 21 du patin est légèrement excentrée vers le bas par rapport à l'axe 45 du vérin. Ainsi, la contrainte appliquée à la conduite par le vérin est plus importante dans la partie haute que dans la partie basse du patin, comme détaillé sur le graphique associé 56. En cas de début de glissement, il se produit alors un accroissement de la force de compression, lequel crée un fluage de la paroi extérieur de la conduite. Ledit fluage est plus important dans la partie haute où la contrainte est plus forte, ce qui amorce la création d'un bourrelet 47, lequel augmente l'effet auto-coinceur, auto-engageant du dispositif. Cet endommagement doit être impérativement évité en fonctionnement normal, mais il constitue la sécurité ultime du clamp selon l'invention au cas où accidentellement, la charge sur la conduite passerait brutalement, par exemple, de 500 tonnes à 800 ou 1000 tonnes suite à des phénomènes transitoires de courte durée tel qu'un choc provoqué par un cycle de tangage du navire durant lequel l'arrière dudit navire se trouve subitement en l'air puis reprend contact brutalement avec la surface de l'eau. Dans ce genre de situation, tous les équipements sont dimensionnés avec des coefficients de sécurité suffisant pour ne pas créer de rupture d'éléments de structure. En revanche, au niveau du clamp selon l'invention, si l'on cherche à éviter de manière absolue la perte du contrôle de la suspension de la ligne on accepte des dégradations ponctuelles en cas de conditions extrêmes dont la probabilité d'occurrence reste faible ou négligeable.

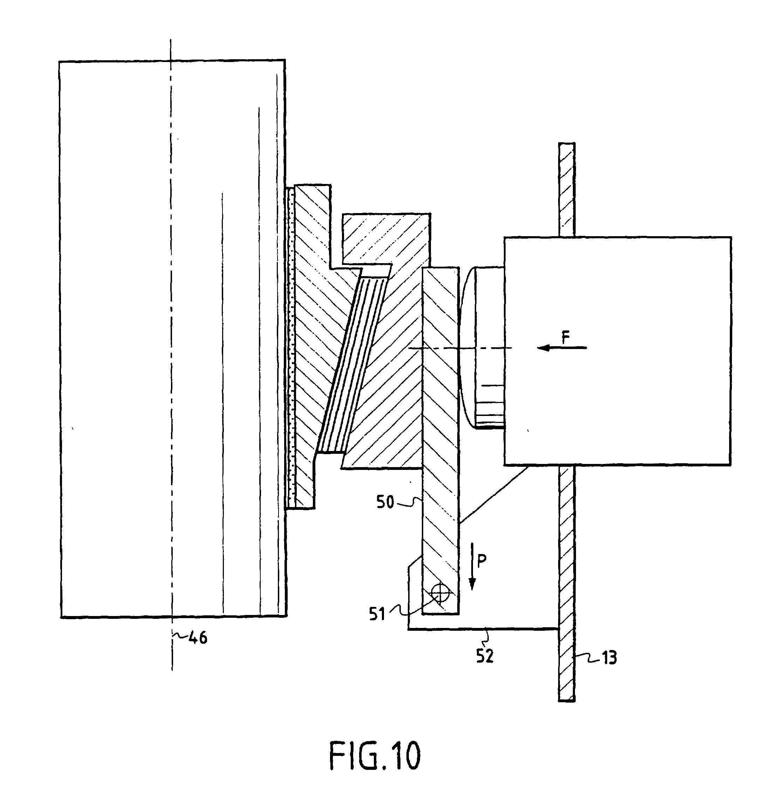

La figure 10 est une vue de côté similaire à la figure 8 d'un dispositif selon l'invention comprenant un vérin de poussée comportant un dispositif de sécurité, non représenté, appuyant sur un patin d'appui en contact avec la conduite par l'intermédiaire d'une poutre munie à la base d'une articulation d'axe 51 la solidarisant à un support 52 lui-même solidaire de la structure de l'élément tubulaire 13 du clamp. En procédant ainsi, les efforts de pression F du vérin sur la conduite sont transmis directement au patin alors que l'effort vertical de retenue P de ladite conduite est transmis par la poutre directement vers ledit bâti 52. On évite ainsi les efforts de flexion dans la tige du vérin et dans le corps dudit vérin, ce qui simplifie considérablement sa conception et son encombrement.

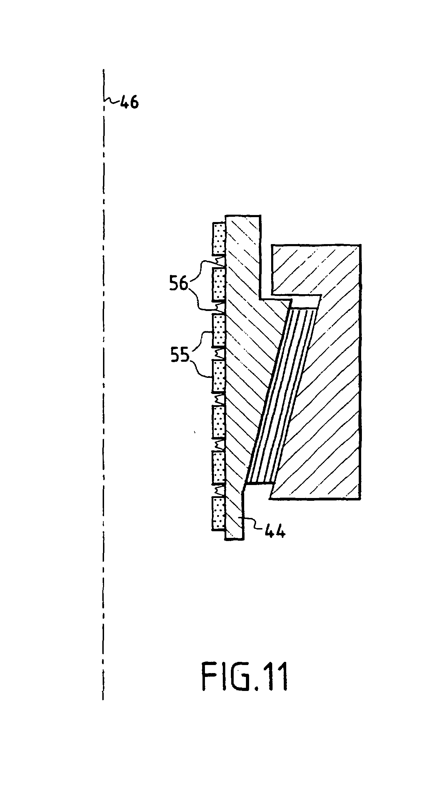

La figure 11 est une section en vue de côté d'un patin d'appui sur la conduite présentant une alternance de blocs en matériau synthétique 55 entre les quels sont interposés, avec un léger retrait des mâchoires métalliques à effet marquant 56 solidaires du support de patin. Ainsi, en fonctionnement normal, l'intégralité de la charge est transférée du patin vers la conduite par l'intermédiaire desdits blocs en matériau synthétique, mais dès que la force radiale devient excessive, en raison , par exemple, de l'effet auto-engageant, le fluage de la paroi externe de la conduite met alors une partie de ladite paroi externe en contact avec lesdits éléments métalliques à effet marquant, augmentant ainsi la sécurité du clamp en conditions extrêmes, tout en créeant un minimum de traces sur le revêtement de la conduite.

Le clamp selon l'invention s'applique aussi à la retenue de câbles sous-marins par des navires spécialisés lors de certaines opérations en mer, par exemple les réparations où l'on doit maintenir, sans l'endommager, le câble en sécurité pendant des périodes pouvant dépasser plusieurs jours.

## Revendications

1. Système de pinces (4) installé sur un support flottant (2), permettant de maintenir en tension une conduite (1), **caractérisé en ce qu'**il comprend
• un élément tubulaire (13) apte à contenir ladite conduite (1) et solidaire dudit support flottant (2),
• ledit élément tubulaire (13) comprenant une pluralité de patins de frottement (17),
• chacun desdits patins (17) étant monté à l'extrémité d'un piston (20) d'un vérin (16) de préférence hydraulique,
• lesdits vérins (16) et patins (20) étant disposés sur plusieurs plans (11) dudit élément tubulaire (13) le long de l'axe longitudinal (46) dudit élément tubulaire, et étant répartis dans chacun desdits plans autour de ladite conduite, de préférence symétriquement par rapport audit axe longitudinal (46) de l'élément tubulaire (13),
• lesdits pistons (20) se déplaçant en translation selon une direction perpendiculaire (45) audit axe longitudinal (46) dudit élément tubulaire (13), de sorte que
- lesdits patins de frottement (17) sont en position de serrage contre ladite conduite (1) lorsque lesdits pistons (20) sont en position d'extension et lesdits patins sont en position de dégagement et libération de ladite conduite lorsqu'ils sont en position rétractée,
- chaque vérin étant muni d'un moyen de blocage mécanique dudit piston en position d'extension.

2. Système de pinces selon la revendication 1, **caractérisé en ce que** ledit moyen de blocage dudit piston (20) est constitué par un moyen de vissage motorisé (30), ledit piston (20) étant solidaire d'un écrou (26) qui coopère avec une vis (27) motorisée, de manière à permettre de déplacer en translation ledit piston et de manière à bloquer ledit piston en position d'extension par blocage de la vis.

3. Système de pinces selon la revendication 2, **caractérisé en ce que** :
• ledit vérin (16) comprend un corps. de vérin creux (15) solidaire dudit élément tubulaire (13),
• ledit piston (20) comprend une tige (25) comprenant un alésage fileté (26) qui coopère avec une vis (27), de sorte que par dévissage, ladite vis sort dudit alésage (26) et son extrémité vient buter contre le fond (31) dudit corps creux (15), bloquant ainsi le mouvement dudit piston (20) lorsque celui-ci est en dite position d'extension, et
• ladite vis comprend un alésage (28) cannelé longitudinalement coopérant avec un arbre cannelé (29) coaxial à ladite vis, de sorte que
- le vissage/dévissage de ladite vis se fait par rotation motorisée dudit arbre cannelé (29) et
- lorsque la vis est vissée à l'intérieur de ladite tige (25), ledit piston (2o) peut se mouvoir librement en translation dans ladite direction perpendiculaire (45) audit axe longitudinal (46) de l'élément tubulaire (13) sous l'effet d'une pression hydraulique, depuis sa position rétractée dans laquelle le piston vient buter contre le fond (32) dudit corps creux jusqu'à sa position en extension dans laquelle l'extrémité de ladite vis vient buter contre le fond (32) dudit corps creux (15), bloquant ainsi les mouvements dudit piston lorsque ledit piston est en position d'extension et de serrage contre ladite conduite.

4. Système de pinces selon l'une des revendications 1 à 3, **caractérisé en ce que** lesdits patins de frottement (17) sont constitués par au moins une couche d'élastomère montée sur un support de patin rigide (22).

5. Système de pinces selon l'une des revendications 1 à 4, **caractérisé en ce qu'**une articulation flexible élastique est incorporée (42, 43) dans ledit support de patin ou disposé (23) entre ledit support de patin et ledit piston, ladite articulation flexible transmettant les contraintes au niveau de la surface d'appui (21) dudit patin de frottement (17) avec ladite conduite (1) en mouvement de translation de ladite conduite par rapport audit élément tubulaire (13), ledit mouvement de translation comprenant une composante de translation longitudinale selon l'axe (46) de ladite conduite et une composante transversale selon une direction perpendiculaire (45) audit axe (46) de ladite conduite.

6. Système de pinces selon la revendication 5, **caractérisé en ce que** l'articulation flexible élastique est constituée d'une butée lamifiée consistant en une pluralité de couches d'élastomère (43) séparées entre elles par des renforts en matériau rigide (42).

7. Système de pinces selon l'une des revendications 4 à 6, **caractérisé en ce que** ladite butée lamifiée est disposée de façon inclinée, de préférence de 5 à 25°, de préférence encore 10 à 20°, par rapport à l'axe longitudinal (46) dudit élément tubulaire (13) de façon à ce que lorsque la conduite (1) a tendance à glisser le long dudit axe longitudinal, la force de serrage du patin (17) contre la conduite (1) est accrue en vertu d'un effet auto-coinceur.

8. Système de pinces selon la revendication 7, **caractérisé en ce que** ladite butée lamifiée a une forme de portion de surface de révolution tronconique.

9. Système de pinces selon l'une des revendications 4 à 8, **caractérisé en ce que** lesdits supports de patin (22) sont montés sur une rotule (23) permettant le pivotement desdits supports et constituée de préférence d'une butée lamifiée de type sphérique.

10. Système de pinces selon l'une des revendication 1 à 9, **caractérisé en ce que** l'élément tubulaire comprend au moins 2, de préférence au moins 4 patins sur chacun desdits plans.

11. Système de pinces selon la revendication 10, **caractérisé en ce que** ledit élément tubulaire (13) comprend au moins 3 plans, de préférence au moins 9 plans.

12. Système de pinces selon l'une des revendications 1 à 11, **caractérisé en ce que** la pression de serrage desdits patins contre ladite conduite est adaptable vérin par vérin.

13. Système de pinces selon l'une des revendications 1 à 12, **caractérisé en ce que** la pression de serrage desdits patins contre ladite conduite est adaptable plan par plan.

14. Système de pinces selon l'une des revendications 1 à 13, **caractérisé en ce que** ledit élément tubulaire comprend au moins une articulation (18) permettant l'ouverture (19) dudit élément tubulaire (13) selon une de ses génératrices longitudinales.

15. Système de pinces selon l'une des revendications 1 à 14, **caractérisé en ce que** ledit patin de frottement (17) n'est pas disposé symétriquement par rapport au plan perpendiculaire à l'axe longitudinal (46) comprenant l'axe (45) dudit vérin, ledit patin (17) étant excentré vers le bas par rapport audit axe (45) dudit vérin.

16. Système de pinces selon l'une des revendications 1 à 15, **caractérisé en ce que** lesdits patins de frottement (17) sont constitués par plusieurs blocs de matériau élastomère (55) entre lesquels sont interposées des mâchoires métalliques à effet marquant (56) solidaires du support de patin (22), lesdites mâchoires (56) étant en retrait par rapport à la surface d'appui (21) desdits blocs (55).

17. Système de pinces selon l'une des revendications 1 à 16, **caractérisé en ce qu'**une poutre (50) est disposée entre le piston (20) et le patin (17) sensiblement parallèlement à l'axe longitudinal (46) de l'élément tubulaire (13), ladite poutre étant reliée à un support de poutre (52) par une articulation d'axe (51) située à la base de la poutre (50), ledit élément support de poutre (52) étant lui-même solidaire de l'élément tubulaire (13).

18. Support flottant (2) comprenant un dispositif pour le raccordement et la pose des parties successives d'une conduite sous-marine depuis ledit support flottant, **caractérisé en ce qu'**il comprend un système de pinces selon l'une des revendications 1 à 17, pour bloquer et maintenir en suspension une première partie de conduite en position verticale ou inclinée, pour être assemblée à une deuxième partie de conduite avant immersion complète de ladite première partie de conduite sous-marine.

## Claims

1. A clamp system (4) installed on a floating support (2) enabling a pipe (1) to be held under tension, the system being **characterised in that** it comprises:
• a tubular element (13) suitable for containing said pipe (1) and secured to said floating support (2);
• said tubular element (13) containing a plurality of friction shoes (17);
• each of said shoes (17) being mounted on the end of a piston (20) of a preferably-hydraulic actuator (16);
• said actuators (16) and shoes (20) being disposed in a plurality of planes (11) of said tubular element (13) along the longitudinal axis (46) of said tubular element, and being distributed in each of said planes around said pipe, preferably symmetrically about said longitudinal axis (46) of the tubular element (13); and
• said pistons (20) moving in translation in a direction (45) perpendicular to said longitudinal axis (46) of said tubular element (13), whereby:
- said friction shoes (17) are in a clamping position against said pipe (1) when said pistons (20) are in an extended position, and said shoes are in a position disengaging and releasing said pipe when the pistons are in a retracted position; and
- each actuator being provided with means for locking said piston mechanically in the extended position.

2. A clamp system according to claim 1, **characterised in that** said means for locking said piston (20) is constituted by motorized screwdriving means (30), said piston (20) being secured to a nut (26) which co-operates with a motor-driven screw (27) so as to move in translation and lock said piston in its extended position by locking the screw.

3. A clamp system according to claim 2, **characterised in that**:
• said actuator (16) comprises a hollow actuator body (15) secured to said tubular element (13);
• said piston (20) comprises a rod (25) having a tapped bore (26) which co-operates with a screw (27) in such a manner that on being unscrewed said screw leaves said bore (26) and its end comes into abutment against the end wall (31) of said hollow body (15), thereby preventing said piston (20) from moving while it is in said extended position; and
• said screw has a longitudinally fluted bore (28) co-operating with a fluted shaft (29) extending coaxially in said screw, such that:
- said screw is tightened and loosened by motor-driven rotation of said fluted shaft (29); and
- when said screw is screwed into said rod (25), said piston (20) is free to move in translation in said direction (45) perpendicular to said longitudinal axis (46) of the tubular element (13) under drive from hydraulic pressure from its retracted position in which the piston comes into abutment against the end wall (32) of said hollow body to its extended position, in which position the end of said screw can be brought into abutment against the end wall (32) of said hollow body (15) thus preventing movement of said piston when said piston is in its extended position clamped against said pipe.

4. A clamp system according to one of claims 1 to 3, **characterised in that** said friction shoes (17) are constituted by at least one layer of elastomer mounted on a rigid shoe support (22).

5. A clamp system according to one of claims 1 to 4, **characterised in that** an elastic flexible hinge (42, 43) is incorporated in said shoe support or is disposed between said shoe support and said piston, said flexible hinge transmitting stresses at the bearing surface (21) of said friction shoe (17) against said pipe (1) due to movement of said pipe in translation relative to said tubular element (13), said translation having a longitudinal component along the axis (46) of said pipe and a transverse component along a direction (45) perpendicular to said axis (46) of said pipe.

6. A clamp system according to claim 5, **characterised in that** the elastic flexible hinge is constituted by a laminated abutment constituted by a plurality of elastomer layers (43) separated from one another by reinforcements (42) of rigid material.

7. A clamp system according to one of claims 4 to 6, **characterised in that** said laminated abutment is disposed in inclined manner, preferably at 5° to 25°, more preferably at 10° to 20°, relative to the longitudinal axis (46) of said tubular element (13) so that when the pipe (1) tends to slip along said longitudinal axis, the force clamping the shoe (17) against the pipe (1) is increased by a self-wedging effect.

8. A clamp system according to claim 7, **characterised in that** said laminated abutment is in the form of a portion of a frustoconical surface of revolution.

9. A clamp system according to one of claims 4 to 8, **characterised in that** said shoe supports (22) are mounted on respective ball-and-socket joints (23) enabling said supports to pivot and preferably constituted by laminated abutments of spherical type.

10. A clamp system according to one of claims 1 to 9, **characterised in that** the tubular element comprises at least two, and preferably at least four shoes in each of said planes.

11. A clamp system according to claim 10, **characterised in that** said tubular element (13) comprises at least three planes, and preferably at least nine planes.

12. A clamp system according to one of claims 1 to 11, **characterised in that** the pressure clamping said shoes against said pipe is adaptable actuator by actuator.

13. A clamp system according to one of claims 1 to 12, **characterised in that** the pressure clamping said shoes against said pipe is adaptable plane by plane.

14. A clamp system according to one of claims 1 to 13, **characterised in that** said tubular element comprises at least one hinge (18) enabling said tubular element (13) to be opened (19) about one of its longitudinal generator lines.

15. A clamp system according to one of claims 1 to 15, **characterised in that** said friction shoe (17) is not disposed symmetrically about the plane perpendicular to the longitudinal axis (46) containing the axis (45) of said actuator, said shoe (17) being offset downwards relative to said axis (45) of said actuator.

16. A clamp system according to one of claims 1 to 15, **characterised in that** said friction shoes (17) are constituted by a plurality of blocks (55) of elastomer material between which there are interposed metal jaws (56) having a marking effect which are secured to the shoe support (22), said jaws (56) being set back from the bearing surfaces (21) of said blocks (55).

17. A clamp system according to one of claims 1 to 16, **characterised in that** a beam (50) is disposed between the piston (20) and the shoe (17) substantially parallel to the longitudinal axis (46) of the tubular element (13), said beam being connected to a beam support (52) by a hinge about an axis (51) situated at the bottom of the beam (50), said beam support element (52) itself being secured to the tubular element (13).

18. A floating support (2) including apparatus for connecting and laying successive portions of an off-shore pipe from said floating support, the support being **characterised in that** the apparatus includes a clamp system according to one of claims 1 to 17 for locking and holding in suspension a first portion of pipe in a vertical or sloping position to be assembled with a second portion of pipe prior to said first portion of off-shore pipe being fully immersed.

## Patentansprüche

1. Greifersystem (4), das auf einem schwimmfähigen Träger (2) installiert ist, das es erlaubt, eine Leitung (1) gespannt zu halten, **dadurch gekennzeichnet, daß** es Folgendes umfaßt:
• ein röhrenförmiges Element (13), das die Rohrleitung (1) enthalten kann und fest mit dem schwimmfähigen Träger (2) verbunden ist,
• wobei das röhrenförmige Element (13) eine Mehrzahl von Reibungskufen (17) umfaßt,
• wobei jede der Kufen (17) an dem Ende eines Kolbens (20) eines Zylinders (16), der bevorzugt hydraulisch ist, installiert ist,
• wobei die Zylinder (16) und Kufen (20) auf mehreren Ebenen (11) des röhrenförmigen Elements (13) entlang der Längsachse (46) des röhrenförmigen Elements angeordnet und in jeder der Ebenen um die Rohrleitung vorzugsweise symmetrisch zu der Längsachse (46) des röhrenförmigen Elements (13) verteilt sind,
• wobei sich die Kolben (20) in translatorisch in einer zur Längsachse (46) des röhrenförmigen Elements (13) senkrechten Richtung (45) bewegen, so daß
- die Reibungskufen (17), wenn die Kolben (20) in Ausfahrstellung sind, in einer Klemmstellung gegen die Rohrleitung (1) sind, und die Reibungskufen (17), wenn die Kolben (20) in eingezogener Stellung sind, in einer Stellung der Freigabe und Auslösung der Rohrleitung sind,
- jeder Zylinder mit einem Mittel zum mechanischen Blockieren des Kolbens in Ausfahrstellung versehen ist.

2. Greifersystem nach Anspruch 1, **dadurch gekennzeichnet, daß** das Mittel zum Blockieren des Kolbens (20) aus einem Mittel zum motorisierten Schrauben (30) besteht, wobei der Kolben (20) fest mit einer Mutter (26) verbunden ist, die mit einer motorisierten Schraube (27) zusammenwirkt, so daß das translatorische Bewegen des Kolbens erlaubt wird, so daß der Kolben in Ausfahrstellung durch Blockieren der Schraube blockiert wird.

3. Greifersystem nach Anspruch 2, **dadurch gekennzeichnet, daß**
• der Zylinder (16) einen hohlen Zylinderkörper (15) umfaßt, der mit dem röhrenförmigen Element (13) fest verbunden ist,
• wobei der Kolben (20) eine Stange (25) umfaßt, die eine Gewindebohrung (26) umfaßt, die mit einer Schraube (27) derart zusammenwirkt, daß die Schraube die Bohrung (26) durch Aufschrauben verläßt und ihr Ende gegen den Grund (31) des Hohlkörpers (15) anschlägt, wobei die Bewegung des Kolbens (20) blockiert wird, wenn sich dieser in der Ausfahrstellung befindet, und
• wobei die Schraube eine Bohrung (28) umfaßt, die längs keilverzahnt ist, die mit einer Keilwelle (29) zusammenwirkt, die zu der Schraube koaxial ist, so daß
- das Einschrauben/Herausschrauben der Schraube durch motorisierte Drehung der Keilwelle (29) erfolgt und
- wenn die Schraube in das Innere der Stange (25) geschraubt ist, der Kolben (20) sich in Verschiebung in die Richtung (45) senkrecht zu der Längsachse (46) des röhrenförmigen Elements (13) unter der Einwirkung eines Hydraulikdrucks von seiner eingezogenen Stellung, in der der Kolben gegen den Grund (32) des Hohlkörpers anschlägt, bis zu seiner Ausfahrstellung frei bewegen kann, in der das Ende der Schraube gegen den Grund (32) des Hohlkörpers (15) anschlägt, wodurch die Bewegungen des Kolbens blockiert werden, wenn sich der Kolben in Ausfahr- und Festziehstellung gegen die Rohrleitung befindet.

4. Greifersystem nach einem der Ansprüche 1 bis 3, **dadurch gekennzeichnet, daß** die Reibungskufen (17) wenigstens aus einer Schicht Elastomer bestehen, die auf einem starren Kufenträger (22) angeordnet ist.

5. Greifersystem nach einem der Ansprüche 1 bis 4, **dadurch gekennzeichnet, daß** eine biegsame elastische Anlenkung in den Kufenträger eingebaut (42, 43) oder zwischen dem Kufenträger und dem Kolben angeordnet (23) ist, wobei die biegsame Anlenkung die Spannungen auf der Ebene der Auflagefläche (21) der Reibungskufe (17) mit der Rohrleitung (1) in Verschiebungsbewegung der Rohrleitung zu dem röhrenförmigen Element (13) überträgt, wobei die Verschiebungsbewegung eine Längsverschiebungskomponente entlang der Achse (46) der Rohrleitung und eine Querverschiebungskomponente in einer zu der Achse (46) der Rohrleitung senkrechten Richtung (45) umfaßt.

6. Greifersystem nach Anspruch 5, **dadurch gekennzeichnet, daß** die elastische biegsame Anlenkung von einem Schichtwiderlager gebildet wird, das aus einer Mehrzahl von Elastomerschichten (43) besteht, die untereinander durch Verstärkungen aus starrem Werkstoff (42) getrennt sind.

7. Greifersystem nach einem der Ansprüche 4 bis 6, **dadurch gekennzeichnet, daß** das Schichtwiderlager schräg, vorzugsweise in einem Winkel von 5 bis 25°, weiter bevorzugt 10 bis 20° zu der Längsachse (46) des röhrenförmigen Elements (13) angeordnet ist, so daß, wenn die Rohrleitung (1) zum Gleiten entlang der Längsachse tendiert, die Festziehkraft der Kufe (17) gegen die Rohrleitung (1) aufgrund einer selbstklemmenden Wirkung gesteigert wird.

8. Greifersystem nach Anspruch 7, **dadurch gekennzeichnet, daß** das Schichtwiderlager eine Form eines Abschnitts einer kegelstumpfartigen Rotationsfläche hat.

9. Greifersystem nach einem der Ansprüche 4 bis 8, **dadurch gekennzeichnet, daß** die Kufenträger (22) auf ein Gelenk (23) montiert sind, das das Schwenken der Träger erlaubt und das vorzugsweise von einem kugelartigen Schichtwiderlager gebildet wird.

10. Greifersystem nach einem der Ansprüche 1 bis 9, **dadurch gekennzeichnet, daß** das röhrenförmige Element mindestens 2, vorzugsweise mindestens 4 Kufen auf jeder der Ebenen umfaßt.

11. Greifersystem nach Anspruch 10, **dadurch gekennzeichnet, daß** das röhrenförmige Element (13) mindestens 3 Ebenen umfaßt, vorzugsweise mindestens 9 Ebenen.

12. Greifersystem nach einem der Ansprüche 1 bis 11, **dadurch gekennzeichnet, daß** der Festziehdruck der Kufen gegen die Rohrleitung von Zylinder zu Zylinder anpaßbar ist.

13. Greifersystem nach einem der Ansprüche 1 bis 12, **dadurch gekennzeichnet, daß** der Festziehdruck der Kufen gegen die Rohrleitung Ebene für Ebene anpaßbar ist.

14. Greifersystem nach einem der Ansprüche 1 bis 13, **dadurch gekennzeichnet, daß** das röhrenförmige Element mindestens eine Anlenkung (18) umfaßt, die das Öffnen (19) des röhrenförmigen Elements (13) nach einer seiner Längsmantellinien erlaubt.

15. Greifersystem nach einem der Ansprüche 1 bis 14, **dadurch gekennzeichnet, daß** die Reibungskufe (17) nicht symmetrisch zu der Ebene angeordnet ist, die zu der Längsachse (46), die die Achse (45) des Zylinders umfaßt, im rechten Winkel steht, wobei die Kufe (17) nach unten zu der Achse (45) des Zylinders exzentriert ist.

16. Greifersystem nach einem der Ansprüche 1 bis 15, **dadurch gekennzeichnet, daß** die Reibungskufen (17) aus mehreren Blöcken Elastomerwerkstoff (55) bestehen, zwischen welchen metallische Backen mit Markierungswirkung (56) eingefügt sind, die mit dem Kufenträger (22) fest verbunden sind, wobei die Backen (56) zu der Auflagefläche (21) der Blöcke (55) nach hinten versetzt sind.

17. Greifersystem nach einem der Ansprüche 1 bis 16, **dadurch gekennzeichnet, daß** ein Balken (50) zwischen dem Kolben (20) und der Kufe (17) im Wesentlichen parallel zur Längsachse (46) des röhrenförmigen Elements (13) angeordnet ist, wobei der Balken mit einem Balkenträger (52) durch eine Achsanlenkung (51) verbunden ist, die sich an der Basis des Balkens (50) befindet, wobei das Balkenträgerelement (52) selbst fest mit dem röhrenförmigen Element (13) verbunden ist.

18. Schwimmfähiger Träger (2), der eine Vorrichtung zum Anschließen und Verlegen aufeinanderfolgender Teile einer Unterseerohrleitung ausgehend von dem schwimmfähigen Träger umfaßt, **dadurch gekennzeichnet, daß** er ein Greifersystem nach einem der Ansprüche 1 bis 17 umfaßt, um einen ersten Rohrleitungsteil in senkrechter oder schräger Stellung zu blockieren und hängend zu halten, damit dieser mit einem zweiten Rohrleitungsteil vor dem kompletten Untertauchen des ersten Unterseerohrleitungsteils zusammengebaut wird.
